# EUROPÄISCHE PATENTANMELDUNG

(11) **EP 4 353 388 A1**
(43) Veröffentlichungstag der Anmeldung: **17.04.2024**
(21) Anmeldenummer: 23200281.6
(22) Anmeldetag: 28.09.2023
(51) Int. Cl.: B23C 5/28, B23B 51/06, B23D 77/00, B23C 5/10, B23D 77/02

(54) **ZERSPANUNGSWERKZEUG**

(30) Priorität: 14.10.2022 DE 102022126883
(71) Anmelder: Gühring KG, 72458 Albstadt (DE)
(72) Erfinder: Kuhli, Guido, 57334 Bad Laasphe (DE)
(74) Vertreter: Winter, Brandl - Partnerschaft mbB

(57) **Zusammenfassung**

Die Erfindung betrifft ein ein- oder mehrschneidiges Zerspanungswerkzeug, insbesondere Fräs-, Reib- oder Bohrwerkzeug, mit einem sich entlang einer zentralen Werkzeugachse erstreckenden Werkzeugkörper (12), der wenigstens einen Schneidsteg (20) aufweist, der einen über eine umfangsseitige Mantelfläche (21) des Schneidstegs (20) radial hinausragenden, wenigstens umfangsschneidenden Schneideinsatz (22) trägt, und einem integrierten Kühlmittelkanalsystem, das einen entlang der Werkzeugachse (11) geführten Hauptkanal (28) und je Schneidsteg (20) wenigstens einen vom Hauptkanal (28) abzweigenden, durch den Schneidsteg (20) geführten Zweigkanal (29, 29a, 29b) aufweist. Erfindungsgemäß hat der wenigstens eine Zweigkanal (29, 29a, 29b), der ausschließlich durch den Schneidsteg (20) geführt ist, eine in der Mantelfläche (21) des Schneidstegs (20) liegende Mündungsöffnung (30, 30a, 30b).

## Beschreibung

Die Erfindung betrifft ein Zerspanungswerkzeug, insbesondere ein Fräswerkzeug, gemäß dem Oberbegriff des Anspruchs 1.

Ein derartiges Werkzeug ist beispielsweise aus der EP 2 962 796 B1 bekannt. Die EP 2 962 796 B1 zeigt und beschreibt im Besonderen ein Zerspanungswerkzeug, insbesondere Fräs-, Reib- oder Bohrwerkzeug, mit einem sich entlang einer zentralen Werkzeugachse erstreckenden Werkzeugkörper, der wenigstens einen Schneidsteg aufweist, der einen über eine umfangsseitige Mantelfläche des Schneidstegs radial hinausragenden und eine Freifläche oder Rundfasenfläche aufweisenden stabförmigen Schneideinsatz trägt, der als ein massiver Körper aus PKD oder CBN (Solid-PKD oder Solid-CBN) oder als ein Verbundkörper aus einem Hartmetallträger mit PKD- oder CBN-Beschichtung ausgebildet ist. Zur Verbesserung der Kühlung, Spanabfuhr sowie Schmierung des zumindest einen Schneideinsatzes soll ein durch den Werkzeugkörper geführter zentraler Hauptkanal über einen von dem Hauptkanal abzweigenden Zweigkanal einen Anschluss an wenigstens einen in dem Schneideinsatz eingearbeiteten Kühlmittelkanalabschnitt mit zumindest einer Mündungsöffnung in der Rundfasenfläche und/oder Freifläche des Schneideinsatzes bilden.

Während der zentrale Hauptkanal und der vom Hauptkanal abzweigende Zweigkanal in dem Werkzeugkörper, der im Vergleich zum Schneideinsatz regelmäßig aus einem duktileren Material gefertigt ist, durch eine einfach auszuführende Bohrbearbeitung erzeugt werden können, muss der Schneideinsatz zum Einbringen des Kühlmittelkanalabschnitts durch ein technisch aufwändigeres Funkenerordier- oder Laserverfahren bearbeitet werden. Das in der EP 2 962 796 B1 angegebene Zerspanungswerkzeug erfordert daher unterschiedliche materialabtragende Verfahren, um das durch den Werkzeugkörper und den Schneideinsatz geführte Kühlmittelkanalsystem fertig auszubilden.

Des Weiteren erfordert die nach der EP 2 962 796 B1 angestrebte Verbesserung der Kühlung, Spanabfuhr und Schmierung eine zuverlässig durchgängige und verlustfreie Kühlmittelzufuhr bis an die Mündungsöffnung an der Freifläche oder Rundfase des Schneideinsatzes, was wiederum eine lagegenaue Befestigung des Schneideinsatzes an dem Werkzeugkörper dergestalt voraussetzt, dass der in dem Schneideinsatz eingearbeitete Kühlmittelkanalabschnitt nahtlos mit dem durch den Schneidsteg geführte Zweigkanal fluchtet. Das vorgeschlagene Zerspanungswerkzeug erfordert daher eine lagegenaue Anordnung des Schneideinsatzes an dem Schneidsteg des Werkzeugkörpers. Eine den Schneideinsatz aufnehmende schlitzförmige Tasche muss daher äußerst präzise ausgebildet sein.

Die Fertigstellung des Zerspanungswerkzeugs ist dadurch insgesamt aufwändig und kostenintensiv.

Zudem schwächt der der durch das Hartmaterial geführte Kühlmittelkanalabschnitt als Durchbruch den Schneideinsatz. Der stabförmige Schneideinsatz benötigt daher eine ausreichend große Stabdicke, um trotz des Kühlmittelkanalabschnitts den bei einer spanabhebenden Bearbeitung eines Werkstücks auf den Schneideinsatz einwirkenden Kräften standhalten zu können.

Genau dieselben Überlegungen bzw. Schwierigkeiten gelten für ein in EP 2 266 739 B1 angegebenes Zerspanungswerkzeug, bei dem eine Mündungsöffnung eines durch einen Schneideinsatz geführten Kühlmittelkanalabschnitts in einer Spanfläche eines Schneideinsatzes liegt.

Die CZ 2010903 A3 offenbart ein Zerspanungswerkzeug, bei dem ein durch einen Schneidsteg geführter Kühlmittelkanal aus einem radial verlaufenden Zweigkanal und einem an den Zweigkanal anschließenden Folgekanal gebildet ist, der in einem Abstand vor der Mantelfläche des Schneidstegs zu dem in Werkzeugdrehrichtung vorausliegenden Schneideinsatz hin ausgerichtet ist und in eine in der Freifläche des Schneideinsatzes ausgebildete Nut mündet. Ein dem Schneideinsatz zugeführtes Kühlmittel erfährt also im Schneidsteg eine Umlenkung zu der in der Freifläche ausgebildeten Nut hin. Die Fertigstellung des in der CZ 2010903 A3 angegebenen Zerspanungswerkzeugs ist dadurch ebenfalls aufwändig und kostenintensiv.

Ausgehend von der EP 2 962 796 B1 liegt der Erfindung daher die Aufgabe zugrunde, ein Zerspanungswerkzeug, insbesondere Fräs-, Reib- oder Bohrwerkzeug, zu schaffen, das sich wirtschaftlicher fertigen lässt und durch eine gute Kühlung und gute Spanabfuhr auszeichnet.

Diese Aufgabe wird durch ein Zerspanungswerkzeug mit den Merkmalen des Anspruchs 1 gelöst. Die abhängigen Ansprüche betreffen vorteilhafte Ausführungsformen.

Ein erfindungsgemäßes Zerspanungswerkzeug, insbesondere Fräs-, Reib- oder Bohrwerkzeug, hat einen sich entlang einer zentralen Werkzeugachse erstreckenden Werkzeugkörper, der wenigstens einen Schneidsteg aufweist, der einen über eine umfangsseitige Mantelfläche des Schneidstegs radial hinausragenden, wenigstens umfangsschneidenden Schneideinsatz trägt, und einem integrierten Kühlmittelkanalsystem, das einen entlang der Werkzeugachse geführten Hauptkanal und je Schneidsteg wenigstens einen vom Hauptkanal abzweigenden, durch den Schneidsteg geführten Zweigkanal aufweist. Erfindungsgemäß hat der wenigstens eine Zweigkanal eine in einer Mantelfläche des Schneidstegs liegende Mündungsöffnung.

Der wenigstens eine Zweigkanal je Schneidsteg verläuft ausschließlich durch bzw. vollständig innerhalb des zugeordneten Schneidstegs, aber nicht mehr durch den Schneideinsatz. Der Zweigkanal verursacht daher keine Schwächung des vorteilhaft aus einem sprödharten Material gebildeten Schneideinsatzes. Er kann daher im Vergleich zu dem eingangs diskutierten Stand der Technik mit einer geringeren Dicke ausgeführt sein.

Da sich der wenigstens eine Zweigkanal nicht mehr in den bzw. durch den Schneideinsatz hindurch erstreckt, sind des Weiteren auch eingangs erwähnte Fluchtungsfehler ausgeschlossen und ist eine durchgehend verlustfreie Kühlmittelzufuhr bis an die Mündungsöffnung gewährleistet.

Da der Schneideinsatz regelmäßig an einer in Werkzeugdrehrichtung vorne liegenden Seite des Schneidstegs, d.h. spannutseitig, angeordnet ist, ist die in der Mantelfläche des Schneidstegs liegende Mündungsöffnung des wenigstens einen Zweigkanals in Werkzeugdrehrichtung hinter dem Schneideinsatz und damit hinter einer am Schneideinsatz ausgebildeten Umfangsschneide und Freifläche angeordnet. Zur Verbesserung der Kühlung und Spanabfuhr liegt die Mündungsöffnung in axialer Richtung gesehen vorzugsweise im Bereich der Längserstreckung der Umfangsschneide des Schneideinsatzes, d.h. also in einem Bereich, in dem bei einer spanabhebenden Bearbeitung eines Werkstücks an der Umfangsschneide Späne entstehen.

Da die Mantelfläche des Schneidstegs gegenüber dem die Umfangsschneide und Freifläche aufweisenden Schneidenträgerabschnitt des Schneideinsatzes radial zurückgesetzt ist, liegt die Mündungsöffnung zudem auf einem kleineren Durchmesser als der radial über die Mantelfläche hinausragende Schneidenträgerabschnitt des Schneideinsatzes. An der Mündungsöffnung austretendes Kühlmittel kann sich dadurch in dem radialen Spalt zwischen der Mantelfläche des Schneidstegs und der zu bearbeitenden Werkstückoberfläche großflächig verteilen und zu einer guten Kühlung des an dem Schneidsteg angeordneten Schneideinsatzes beitragen.

Da der Zweigkanal durch den Schneidsteg hindurch verläuft, kann der wenigstens eine Zweigkanal hinsichtlich seiner Lage im Schneidsteg, seiner Ausrichtung bzw. seines Verlaufs relativ zur zentralen Werkzeugachse und seines Strömungsquerschnitts, insbesondere Durchmessers, ungeachtet der Größe und Lage des Schneideinsatzes am Schneidsteg so festlegt werden, dass bei einer spanabhebenden Bearbeitung eines Werkstücks eine gute Kühlung des Schneidteils und eine gute Spanabfuhr erhalten werden.

Jeder Zweigkanal kann zumindest in einem die Mündungsöffnung bildenden Längenabschnitt unter einem definierten Winkel zur Werkzeugachse angestellt sein. Über den definierten Winkel lässt sich die Strömungsrichtung des an der Mündungsöffnung austretenden Kühlmittelstrahls und damit der Spanfluss der an der Umfangsschneide entstehenden Späne bestimmen.

Zumindest ein die Mündungsöffnung bildender Längenabschnitt des wenigstens einen Zweigkanals kann zur Werkzeugachse vorteilhaft unter einem Winkel im Bereich von 50° bis 60°, vorzugsweise 55°, und insbesondere so angestellt sein, dass er vom Schaft weg in Richtung Werkzeugstirnseite orientiert ist, um die an der Umfangsschneide entstehenden Späne in Richtung Werkzeugstirnseite zu lenken.

In fertigungstechnischer Hinsicht sind/ist der Hauptkanal und/oder der wenigstens eine Zweigkanal vorzugsweise geradlinig ausgeführt. Der Hauptkanal und der wenigstens eine Zweigkanal können insbesondere als von der Mantelfläche durch den Schneidsteg bis zum zentralen Hauptkanal führende Bohrungen ausgeführt sein, die sich fertigungstechnisch einfach herstellen lassen.

In einer bevorzugten Ausführungsform ist der Hauptkanal mittig durch den Werkzeugkörper entlang der Werkzeugachse geführt und endet der Hauptkanal in einem definierten Abstand vor der Werkzeugstirnseite. Das gesamte über den Hauptkanal zugeführte Kühlmittel verteilt sich daher auf den wenigstens einen Zweigkanal. Dabei kann der wenigstens eine Zweigkanal in einer die Werkzeugachse enthaltenden Längsschnittebene liegen.

Im Sinne einer guten Spanabfuhr ist eine Strömungsquerschnittsfläche des wenigstens einen Zweigkanals zumindest im Bereich der mantelseitigen Mündungsöffnung vorteilhaft so ausgelegt, dass der Strömungsdruck eines an der Mündungsöffnung des wenigstens einen Zweigkanals austretenden Kühlmittelstrahls höher ist als der Strömungsdruck des durch den Hauptkanal strömenden Kühlmittels. Die Mündungsöffnung des wenigstens einen Zweigkanals kann daher als Düse verstanden werden, aus der das Kühlmittel herausspritzt. D.h., dass ein lichter Querschnitt des zentralen Hauptkanals größer ist als ein lichter Querschnitt des wenigstens einen Zweigkanals oder für den Fall, dass von dem zentralen Hauptkanal mehrere Zweigkanäle abzweigen und jeweils eine mantelseitige Mündungsöffnung haben, als die Summe der lichten Querschnitte der mehreren Zweigkanäle. Auf diese Weise kann eine Strömungsdruckerhöhung an der Mündungsöffnung des wenigstens einen Zweigkanals erreicht oder wenigstens ein Strömungsdruckabfall verhindert werden.

In einer bevorzugten Ausführungsform weist der Werkzeugkörper mehr als einen Schneidsteg, insbesondere vier Schneidstege, auf, die mit gleichmäßiger oder ungleichmäßiger Verteilung um die Werkzeugachse herum angeordnet sind, durch Spannuten voneinander beabstandet sind und jeweils einen wenigstens umfangsschneidenden Schneideinsatz tragen. In diesem Fall sind die Strömungsquerschnittsflächen der Zweigkanäle zumindest im Bereich den mantelseitigen Mündungsöffnungen insgesamt, d.h. in der Summe, so ausgelegt, dass die austretenden Kühlmittelstrahlen mit einem Überdruck im Vergleich zum Strömungsdruck des in den Hauptkanal eintretenden Kühlmittels austreten.

In einer bevorzugten Ausführungsform ist der Werkzeugkörper funktional in einen Schaft zum Einspannen in einen Werkzeughalter und einen den wenigstens einen Schneidsteg aufweisenden Schneidteil unterteilt, wobei der Hauptkanal durch den Schaft hindurch in den Schneidteil hineingeführt ist.

In einer bevorzugten Ausführungsform hat der wenigstens eine Schneidsteg einen den Schneideinsatz, vorzugsweise formschlüssig, aufnehmenden Sitz mit einer parallel zur Werkzeugachse verlaufenden Stützfläche, die in Werkzeugdrehrichtung vor einer die Werkzeugachse enthaltenden Längsschnittebene (d.h. "über Mitte") liegt.

Des Weiteren liegt in einer bevorzugten Ausführungsform eine an dem Schneideinsatz ausgebildete Umfangsschneide in Werkzeugdrehrichtung vor einer die Werkzeugachse enthaltenden Längsschnittebene (d.h. "über Mitte").

Der Schneideinsatz oder die Schneideinsätze können als massive Körper aus PKD oder CBN (Solid-PKD oder Solid-CBN) oder als Verbundkörper aus einem Hartmetallträger mit einer PKD- oder CBN-Beschichtung ausgebildet und an dem jeweiligen Schneidsteg durch Verlötung befestigt sein.

Nachfolgend werden unter Bezugnahme auf die beigefügten Zeichnungen bevorzugte Ausführungsformen eines erfindungsgemäßen Zerspanungswerkzeugs vorgestellt. In den Zeichnungen zeigt:
Fig. 1 eine perspektivische Seitenansicht eines erfindungsgemäßen Zerspanungswerkzeugs gemäß einer ersten Ausführungsform,
Fig. 2 eine Seitenansicht des Zerspanungswerkzeugs gemäß der ersten Ausführungsform,
Fig. 3 eine Längsschnittansicht des Zerspanungswerkzeugs gemäß der ersten Ausführungsform,
Fig. 4a eine Stirnansicht des Zerspanungswerkzeugs gemäß der ersten Ausführungsform,
Fig. 4b eine im Maßstab vergrößerte Darstellung einer Einzelheit A aus Fig. 4a, und
Fig. 5 eine Längsschnittansicht eines Zerspanungswerkzeugs gemäß einer zweiten Ausführungsform.

### Erste Ausführungsform

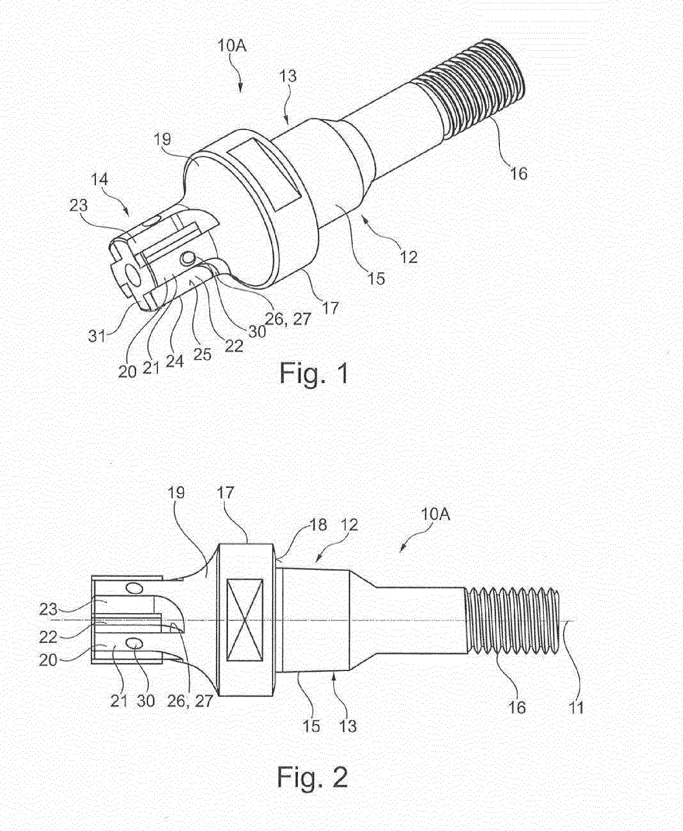

Fig. 1 bis 4b zeigen schematisch ein erfindungsgemäßes Zerspanungswerkzeug gemäß einer ersten Ausführungsform, das beispielhaft als ein Schaftfräser 10, insbesondere zur Fräsbearbeitung der Kugelfenster bzw. der Kugelkontaktflächen der Fenster eines Kugelkäfigs, ausgebildet ist. Es sei an dieser Stelle hervorgehoben, dass das Zerspanungswerkzeug selbstverständlich für andere Einsatzzwecke hergerichtet sein kann, wie z.B. zum Reiben, Aufbohren oder Bohren.

Der Schaftfräser 10A umfasst einen sich entlang einer zentralen Werkzeugachse 11 erstreckenden Werkzeugkörper 12, der sich funktional in einen Schaft 13 und einen Schneidteil 14 unterteilen lässt.

Der Schaft 13 des Werkzeugkörpers 12 weist in der gezeigten Ausführungsform einen in einen Innenkonus-Aufnahmeabschnitt eines (nicht gezeigten) Werkzeughalters einziehbaren Außenkonus-Spannabschnitt 15 auf, an den sich ein mit einem Schraubantrieb im Werkzeughalter zu verschraubender Außengewindeabschnitt 16 anschließt. In Richtung Schneidteil 14 schließt sich an den Schaft 13 ein im Durchmesser vergrößerter Bund 17 an, der auf seiner dem Schaft 13 zugewandten Seite eine ringförmige Anschlagfläche 18 zum Anschlag gegen einen werkzeughalterseitigen Anschlag aufweist und auf seiner dem Schneidteil 14 zugewandten Seite über einen Verjüngungsabschnitt 19 in den Schneidteil 14 übergeht. Die Ausgestaltung des Schafts 13 und die Anordnung des Bundes 17 bzw. Verjüngungsabschnitts 19 sind für die vorliegende Erfindung jedoch nicht entscheidend. Der Schaft 13 muss lediglich so ausgeführt sein, dass er sich in gängige, dem Fachmann bekannte Werkzeughalter (Werkzeugaufnahmen bzw. Spannfutter) einspannen lässt. Beispielsweise kann der Schaft 13 als ein Zylinderschaft oder ein Konusschaft ausgeführt sein.

Der Schneidteil 14 des Werkzeugkörpers 12 weist in der gezeigten Ausführungsform vier Schneidstege 20 auf, die in gleichmäßigen Abständen von 90° um die Werkzeugachse 11 herum verteilt sind und jeweils einen über eine umfangsseitige Mantelfläche 21 des Schneidstegs 20 radial hinausragenden, umfangsschneidenden Schneideinsatz 22 tragen. Es sei an dieser Stelle darauf hingewiesen, dass die Zahl der Schneidstege 20 für die Erfindung nicht entscheidend ist. Es genügt, wenn das erfindungsgemäße Zerspanungswerkzeug wenigstens einen Schneidsteg 20 aufweist. Die Schneidstege 20 sind durch Spannuten 23 voneinander getrennt, die in der gezeigten Ausführungsform geradlinig und entlang der Werkzeugachse 11 verlaufen, grundsätzlich aber auch wendelförmig um die Werkzeugachse 11 verlaufen können.

In der gezeigten Ausführungsform liegen die Mantelflächen 21 der Schneidstege 20 jeweils auf einer Zylinderfläche um die Werkzeugdrehachse 11.

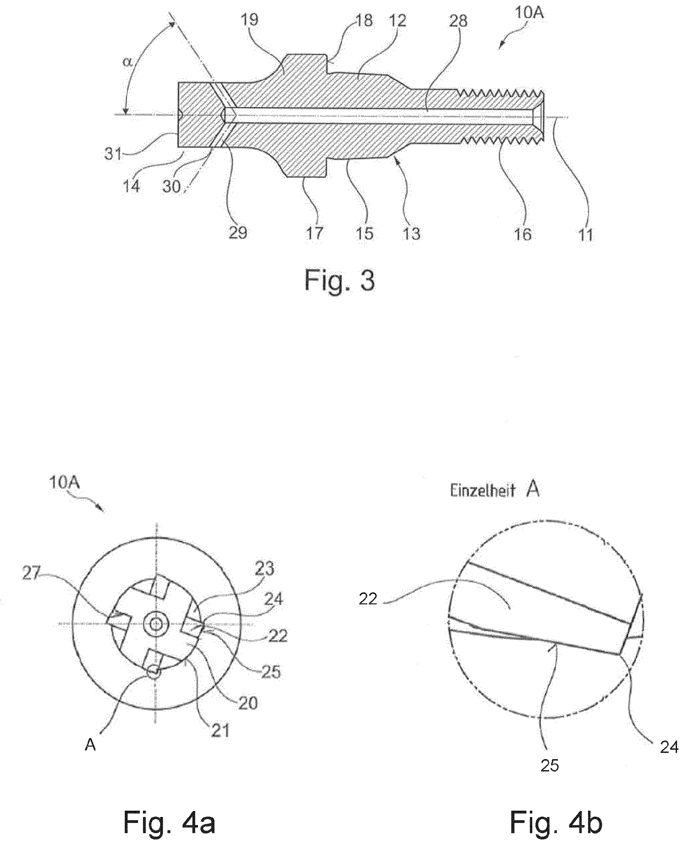

Jeder Schneidsteg 20 trägt einen, in der gezeigten Ausführungsform umfangsschneidenden Schneideinsatz 22, der mit seinem eine Umfangsschneide 24 und Freifläche 25 aufweisenden Schneidenträgerabschnitt um ein definiertes Maß radial über die Mantelfläche 21 des zugeordneten Schneidstegs 21 hinausragt, wie es aus Fig. 2, 4a und 4b hervorgeht.

Die Schneideinsätze 22 sind jeweils als platten- oder stabförmige Schneidkörper aus einem gängigen, dem Fachmann bekannten Hartmaterial, wie z.B. PKD oder CBN, oder als Verbundkörper aus einem Hartmetallträger und einer PKD- oder CBN-Beschichtung ausgebildet und weisen jeweils wenigstens eine Umfangsschneide 24 und eine an die Umfangsschneide 24 anschließende Umfangsfreifläche 25 auf. Davon abweichend können die Schneideinsätze 24 zusätzlich stirnschneidend ausgeführt sein, d.h. neben der Umfangsschneide 24 und Umfangsfreifläche 25 jeweils eine (nicht gezeigte) Stirnschneide und Stirnfreifläche aufweisen.

In der gezeigten Ausführungsform sind die Schneideinsätze 22 an dem zugeordneten Schneidsteg 20 jeweils in einem dafür vorgesehenen Sitz 26 formschlüssig aufgenommen, zur Aufnahme der Schnittkräfte an einer den Boden des Sitzes bildenden Stützfläche 27 abgestützt und durch Verlötung befestigt. Die Stützflächen 27 sind jeweils aus einer ebenen Fläche gebildet, die parallel zur Werkzeugachse 11 verläuft und in Werkzeugdrehrichtung vor einer zugeordneten, die Werkzeugachse 11 enthaltenden Längsschnittebene (d.h. "über Mitte") liegt, wobei aber die an dem Schneideinsatz 22 ausgebildete Umfangsschneide 24 in Werkzeugdrehrichtung vor der die Werkzeugachse enthaltenden Längsschnittebene (d.h. "über Mitte") liegt. Der Schneideinsatz 22 liegt daher insgesamt über Mitte. Es sei an dieser Stelle darauf hingewiesen, dass die über-Mitte-Lage des Schneideinsatzes 22 nicht entscheidend ist.

In der gezeigten Ausführungsform liegen die Umfangsschneiden 24 auf einer sich zum Schaft 13 hin schwach verjüngenden (nicht gezeigten) Konusfläche um die Werkzeugachse 11. Des Weiteren sind die Schneideinsätze 22 in der gezeigten Ausführungsform, wie bereits erwähnt, umfangsschneidend, d.h. für eine Fräsbearbeitung, ausgelegt. Die Stirnseiten und Eckfasen der Schneideinsätze 22 sind daher nicht schneidend. Es sei an dieser Stelle hervorgehoben, dass das Zerspanungswerkzeug alternativ zu der gezeigten Ausführungsform aber auch stirn- und umfangsschneidend ausgebildet sein kann, wodurch sich die bereits erwähnten weiteren Einsatzzwecke ergeben, z.B. Aufbohren, Reiben oder Bohren ins Volle.

Das erfindungsgemäße Zerspanungswerkzeug hat ein in den Werkzeugkörper 12 integriertes Kühlmittelkanalsystem, das, wie es in Fig. 3 gezeigt ist, einen entlang der Werkzeugachse geführten Hauptkanal 28 und je Schneidsteg 22 wenigstens einen vom Hauptkanal 28 abzweigenden, ausschließlich durch den Schneidsteg 22 geführten Zweigkanal 29 aufweist. Die Fig. 3 zeigt je Schneidsteg 22 einen Zweigkanal 29.

Wie die Fig. 3 zeigt, endet jeder Zweigkanal 29 in einer in der Mantelfläche 21 des zugeordneten Schneidstegs 20 liegenden Mündungsöffnung 30. Die Mündungsöffnungen 30 liegen in Werkzeugdrehrichtung gesehen jeweils hinter dem an dem zugeordneten Schneidsteg 20 angeordneten Schneideinsatz 22 und in axialer Richtung gesehen im Bereich der Längserstreckung der Umfangsschneide 24 des an dem zugeordneten Schneidsteg 20 angeordneten Schneideinsatzes 22. Die Mantelflächen 21 der Schneidstege 20 sind gegenüber den die Umfangsschneide 24 und Freifläche 25 aufweisenden Schneidenträgerabschnitten der Schneideinsätze 22 radial zurückgesetzt, wie es in Fig. 4a gezeigt ist, so dass die Mündungsöffnungen 30 jeweils auf einem kleineren Durchmesser liegen als die radial über die Mantelflächen 21 der Schneidstege 20 hinausragenden Schneidenträgerabschnitte der Schneideinsätze 22.

Der zentrale Hauptkanal 28 und die Zweigkanäle 29 sind jeweils als geradlinig geführte Bohrungen ausgebildet, wobei der Hauptkanal 28 mittig durch den Werkzeugkörper 12 entlang der Werkzeugachse 11 geführt ist und in einem definierten Abstand (vgl. Fig. 3) vor der Werkzeugstirnseite 31 endet. Die Zweigkanäle 29 liegen jeweils in einer die Werkzeugachse 11 enthaltenden Längsschnittebene.

Die Zweigkanäle 31 sind im Besonderen so durch den jeweiligen Schneidsteg 20 geführt, dass einerseits der Schaftfräser durch die über die Kühlmittelströmung durch die Schneidstege 20 bewirkte Wärmeabfuhr gekühlt wird und andererseits die bei einer spanabhebenden Bearbeitung eines Werkstücks in dem Längenbereich des Werkzeugkörpers 12, in dem sie von dem bearbeiteten Werkstück abgelöst werden, direkt und gezielt in Richtung Werkzeugstirnseite 31 abgeleitet werden. Der Austrittswinkel α der Kühlmittelstrahlen, d.h. die Richtung der Zweigkanäle 31 zumindest in den die Mündungsöffnung 30 bildenden Zweigkanalabschnitten, und die Strömungsquerschnittsflächen der Zweigkanäle 30 (zumindest im Bereich der Mündungsöffnungen) bestimmen die Strömungsrichtung und den Strömungsdruck der Kühlmittelstrahlen an den Mündungsöffnungen 30.

In der gezeigten Ausführungsform sind die Zweigkanäle 30 jeweils unter einem definierten Winkel α von 50° bis 60°, vorzugsweise 55°, zur Werkzeugachse 11 angestellt und so ausgerichtet ist, dass sie vom Schaft 13 weg in Richtung Werkzeugstirnseite 31 orientiert sind. Zudem sind die Strömungsquerschnittsflächen des Hauptkanals 28 und der Zweigkanäle 29 jeweils so ausgelegt, dass der Strömungsdruck der an den Mündungsöffnungen 31 austretenden Kühlmittelstrahlen jeweils höher ist als der Strömungsdruck des durch den Hauptkanal 29 strömenden Kühlmittels. Das heißt, dass die Strömungsquerschnittsflächen der Zweigkanäle 29 (zumindest im Bereich der Mündungsöffnungen 30) insgesamt, d.h. in der Summe, kleiner sind als die (kleinste) Strömungsquerschnittsfläche des Hauptkanals 29.

Als Kühlmittel kann Druckluft (z.B. 4 bis 6 bar) oder ein anderes gängiges Kühlmittel (auch Kühlschmiermittel genannt) auf Basis eines Druckluft-Öl-Gemischs eingesetzt werden.

### Zweite Ausführungsform

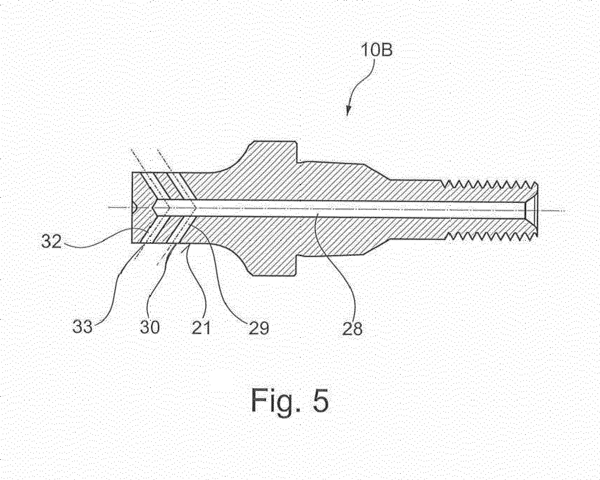

Fig. 5 zeigt ein erfindungsgemäßes Zerspanungswerkzeug gemäß einer zweiten Ausführungsform, das hier wieder beispielhaft als ein Schaftfräser 10B ausgebildet ist, der sich von dem Schaftfräser 10A gemäß der ersten Ausführungsform lediglich dadurch unterscheidet, dass je Schneidsteg zwei Zweigkanäle 29 und 32 vorgesehen sein, die von dem zentralen Hauptkanal 28 abzweigen und parallel nebeneinander durch den Schneidsteg hindurch bis zu einer Mündungsöffnung 30 bzw. 33 an der Mantelfläche 21 des Schneidstegs geführt sind.

Davon abweichend können in einer nicht gezeigten weiteren Ausführungsform je Schneidsteg aber auch mehr als zwei Zweigkanäle vorgesehen sein, die von dem zentralen Hauptkanal abzweigen und, vorzugsweise parallel nebeneinander, durch den Schneidsteg hindurch bis zu einer jeweiligen Mündungsöffnung an der Mantelfläche des Schneidstegs geführt sind.

Die Erfindung schafft somit ein ein- oder mehrschneidiges Zerspanungswerkzeug mit einem integrierten Kühlmittelkanalsystem. Erfindungsgemäß erfolgt die Kühlmittelversorgung des Schneidteils durch ein ausschließlich im Werkzeugkörper ausgebildetes Kanalsystem. Das Kanalsystem führt daher nicht mehr durch den oder die am Werkzeugkörper gehaltenen Schneideinsätze. Die Mündungsöffnung jedes Zweigkanals liegt in einer umfangsseitigen Mantelfläche eines zugeordneten Schneidstegs. Der oder die Zweigkanäle greifen daher nicht mehr in den oder die am Schneidsteg angeordneten Schneideinsätze ein.

Die erfindungsgemäße Lösung lässt sich grundsätzlich an jedem gattungsgemä-ßen Zerspanungswerkzeug ausführen, das insbesondere zum Fräsen, alternativ dazu aber auch Reiben und/oder Bohren oder Aufbohren verwendet werden kann. Das Zerspanungswerkzeug kann für diese Zwecke drehend angetrieben oder stehend eingesetzt werden.

Die Zahl der Schneidstege ist nicht auf vier beschränkt, wie dies bei den gezeigten Ausführungsformen der Fall ist. Grundsätzlich genügt ein Schneidsteg. Im Sinne einer hohen Laufruhe können zwei oder mehr Schneidstege vorteilhaft seid.

Mehrere Schneidstege können in gleichmäßigen Abständen um die Werkzeugachse herum verteilt sein. Im Sinne einer hohen Laufruhe können die mehren Schneidstege aber auch mit einer ungleichmäßigen Verteilung um die Werkzeugachse angeordnet sein.

Je nach Einsatzzweck des Zerspanungswerkzeugs können die Schneideinsätze abweichend von den gezeigten Ausführungsformen nicht nur umfangs-, sondern stirn- und umfangsschneidend ausgebildet sein.

Das Zerspanungswerkzeug kann statt geradlinig verlaufender Spannuten wendelförmig verlaufende Spannnuten aufweisen.

### BEZUGSZEICHENLISTE

- 10A, 10B: Schaftfräser
- 11: Werkzeugachse
- 12: Werkzeugkörper
- 13: Schaft
- 14: Schneidteil
- 15: Außenkonus-Spannabschnitt
- 16: Außengewindeabschnitt
- 17: Bund
- 18: Anschlagfläche
- 19: Verjüngungsabschnitt
- 20: Schneidsteg
- 21: Mantelfläche
- 22: Schneideinsatz
- 23: Spannut
- 24: Umfangsschneide
- 25: Umfangsfreifläche
- 26: Sitz
- 27: Stützfläche
- 28: Hauptkanal
- 29: Zweigkanal
- 30: Mündungsöffnung
- 31: Werkzeugstirnseite
- 32: Zweigkanal
- 33: Mündungsöffnung
- α: Austrittswinkel

## Patentansprüche

1. Zerspanungswerkzeug (10, 40), insbesondere Fräs-, Reib- oder Bohrwerkzeug, mit einem sich entlang einer zentralen Werkzeugachse (11) erstreckenden Werkzeugkörper (12), der wenigstens einen Schneidsteg (20) aufweist, der einen über eine umfangsseitige Mantelfläche (21) des Schneidstegs (20) radial hinausragenden, wenigstens umfangsschneidenden Schneideinsatz (22) trägt, und einem integrierten Kühlmittelkanalsystem, das einen entlang der Werkzeugachse (11) geführten Hauptkanal (28) und je Schneidsteg (20) wenigstens einen vom Hauptkanal (28) abzweigenden, durch den Schneidsteg (20) geführten Zweigkanal (29, 29a, 29b) aufweist, **dadurch gekennzeichnet, dass**
der wenigstens eine Zweigkanal (29, 29a, 29b) eine in der Mantelfläche (21) des Schneidstegs (20) liegende Mündungsöffnung (30, 30a, 30b) hat.

2. Zerspanungswerkzeug (10, 40) nach Anspruch 1, **dadurch gekennzeichnet, dass** der wenigstens eine Zweigkanal (29, 29a, 29b) wenigstens in einem die Mündungsöffnung (30, 30a, 30b) bildenden Längenabschnitt unter einem definierten Winkel (α) zur Werkzeugachse (11) angestellt ist.

3. Zerspanungswerkzeug (10, 40) nach Anspruch 2, **dadurch gekennzeichnet, dass** wenigstens der die Mündungsöffnung (30, 30a, 30b) bildende Längenabschnitt zur Werkzeugachse (11) so angestellt ist, dass er in Richtung einer Werkzeugstirnseite (31) orientiert ist.

4. Zerspanungswerkzeug (10, 40) nach Anspruch 3, **dadurch gekennzeichnet, dass** wenigstens der die Mündungsöffnung (30, 30a, 30b) bildende Längenabschnitt unter einem Winkel (α) im Bereich von 50° bis 60°, vorzugsweise 55°, zur Werkzeugachse angestellt ist.

5. Zerspanungswerkzeug (10, 40) nach einem der vorhergehenden Ansprüche, **dadurch gekennzeichnet, dass** der Hauptkanal (28) und/oder der wenigstens eine Zweigkanal (29, 29a, 29b) geradlinig ausgeführt sind/ist.

6. Zerspanungswerkzeug (10, 40) nach einem der vorhergehenden Ansprüche, **dadurch gekennzeichnet, dass** die Mündungsöffnung (30, 30a, 30b) des Zweigkanals (29, 29a, 29b) in Axialrichtung des Werkzeugkörpers (12) gesehen im Bereich der Längenerstreckung des Schneideinsatzes (22) liegt.

7. Zerspanungswerkzeug (10, 40) nach einem der vorhergehenden Ansprüche, **dadurch gekennzeichnet, dass** der Hauptkanal (28) mittig durch den Werkzeugkörper (12) entlang der Werkzeugachse (11) geführt ist.

8. Zerspanungswerkzeug (10, 40) nach einem der vorhergehenden Ansprüche, **dadurch gekennzeichnet, dass** der Hauptkanal (28) in einem definierten Abstand vor der Werkzeugstirnseite (31) endet.

9. Zerspanungswerkzeug (10, 40) nach einem der vorhergehenden Ansprüche, **dadurch gekennzeichnet, dass** der Zweigkanal (29, 29a, 29b) in einer die Werkzeugachse (11) enthaltenden Längsschnittebene liegt.

10. Zerspanungswerkzeug (10, 40) nach einem der vorhergehenden Ansprüche, **dadurch gekennzeichnet, dass** eine Querschnittsfläche des wenigstens einen Zweigkanals (29, 29a, 29b) zumindest im Bereich der Mündungsöffnung (30, 30a, 30b) so ausgelegt ist, dass der Strömungsdruck eines an der Mündungsöffnung (30, 30a, 30b) austretenden Kühlmittelstrahls höher ist als der Strömungsdruck des durch den Hauptkanal (28) strömenden Kühlmittelstrahls.

11. Zerspanungswerkzeug (10, 40) nach einem der vorhergehenden Ansprüche, **dadurch gekennzeichnet, dass** der Werkzeugkörper (12) mehrere, insbesondere vier, Schneidstege (20) mit gleichmäßiger Verteilung um die Werkzeugachse (11) aufweist, die jeweils einen Schneideinsatz (22) tragen.

12. Zerspanungswerkzeug (10, 40) nach einem der vorhergehenden Ansprüche, **dadurch gekennzeichnet, dass** der Werkzeugkörper (12) einen Schaft (13) zum Einspannen in einen Werkzeughalter und einen den wenigstens einen Schneidsteg (20) aufweisenden Schneidteil (14) aufweist, wobei der Hauptkanal (28) durch den Schaft (13) hindurch in den Schneidteil (14) hineingeführt ist.

13. Zerspanungswerkzeug (10, 40) nach einem der vorhergehenden Ansprüche, **dadurch gekennzeichnet, dass** der wenigstens eine Schneidsteg (20) eine den Schneideinsatz (22) tragende Stützfläche (27) aufweist, die parallel zur Werkzeugachse (11) verläuft und in Werkzeugdrehrichtung hinter einer die Werkzeugachse (11) enthaltenden Längsschnittebene liegt.

14. Zerspanungswerkzeug (10, 40) nach einem der vorhergehenden Ansprüche, **dadurch gekennzeichnet, dass** eine an dem Schneideinsatz (22) ausgebildete Umfangsschneide (24) in Werkzeugdrehrichtung vor einer die Werkzeugachse (11) enthaltenden Längsschnittebene liegt.
